# FASCICULE DE BREVET EUROPEEN

(11) **EP 3 250 875 B1**
(45) Date de publication et mention de la délivrance du brevet: **13.11.2019**
(21) Numéro de dépôt: 16701639.3
(22) Date de dépôt: 26.01.2016
(51) Int. Cl.: F28F 21/06, B29C 65/02, C09K 5/06, C08J 9/00, F28D 20/02

(54) **MATÉRIAU À CHANGEMENT DE PHASE ENCAPSULÉ, BATTERIE THERMIQUE ET PROCÉDÉ DE FABRICATION ASSOCIÉ**
EINGEKAPSELTES PHASENWECHSELMATERIAL, THERMISCHE BATTERIE UND ZUGEHÖRIGES HERSTELLUNGSVERFAHREN
ENCAPSULATED PHASE-CHANGE MATERIAL, THERMAL BATTERY AND ASSOCIATED PRODUCTION METHOD

(30) Priorité: 26.01.2015 FR 1550581
(43) Date de publication de la demande: 06.12.2017
(73) Titulaire: Valeo Systèmes Thermiques, 78320 Le Mesnil Saint Denis (FR)
(72) Inventeur: BRY, Samuel, 53260 Parne Sur Roc (FR); BOISSELLE, Patrick, 53000 Laval (FR); AZZOUZ, Kamel, 75012 Paris (FR)
(74) Mandataire: Neuviale, Bertrand
(86) Numéro de dépôt international: PCT/EP2016/051594
(87) Numéro de publication internationale: WO 2016/120281

(56) Documents cités:
- WO-A1-01/06195
- WO-A1-97/47937
- DE-A1-102014 109 165
- US-A- 4 388 963

## Description

La présente invention concerne le domaine des matériaux à changement de phase encapsulés notamment pour batteries thermiques selon le préambule de la revendication 1. US 4 388 963 divulgue un tel matériau à changement de phase encapsulé.

Les batteries thermiques sont généralement utilisées pour le chauffage de l'habitacle, notamment dans des véhicules électriques et hybrides ou alors pour le préchauffage d'un fluide caloporteur dans un circuit de gestion thermique. Les batteries thermiques peuvent également être utilisées pour le préchauffage de l'huile moteur ou de l'huile de boite de transmission automatique de véhicules à moteur à combustion interne.

Une batterie thermique à matériaux à changement de phase comporte généralement une enceinte formant un réservoir à l'intérieur duquel est placé le matériau à changement de phase généralement sous forme encapsulée. L'étanchéité de ces encapsulations est importante car une fuite du matériau à changement de phase, par exemple sous forme liquide, diminue l'efficacité de la batterie thermique mais peut également endommager les composants du circuit de circulation du fluide.

Un des buts de la présente invention est donc de remédier au moins partiellement aux inconvénients de l'art antérieur et de proposer un matériau a changement de phase encapsulé amélioré.

La présente invention concerne donc un matériau à changement de phase encapsulé comportant un matériau à changement de phase contenu dans un tube, ledit tube étant réalisé en matière plastique et présentant à au moins une de ses extrémités une soudure de scellement.

La présence des soudures de scellement permet une bonne étanchéité et ainsi diminue les risques de fuite du matériau à changement de phase notamment lorsque ce dernier est en phase liquide.

Selon l'invention, la soudure de scellement est réalisée par écrasement et fusion de la paroi dudit tube.

Selon l'invention, le matériau à changement de phase encapsulé comporte au sein tube un bouchon disposé entre la soudure de scellement et le matériau à changement de phase.

Selon un autre aspect de l'invention, la soudure de scellement présente des bourrelets radiaux.

La présente invention concerne également une batterie thermique comportant un matériau à changement de phase encapsulé tel que décrit précédemment.

La présente invention concerne également un procédé de fabrication d'un matériau à changement de phase encapsulé comportant un matériau à changement de phase contenu dans un tube réalisé en matière plastique, ledit procédé comprenant au moins une étape de scellement par soudure des parois du tube à ses extrémités.

Selon le procédé de fabrication l'invention, ce dernier comporte une étape d'introduction d'un bouchon entre les extrémités du tube et le matériau à changement de phase, précédant l'étape de scellement pas soudure.

Selon le procédé de fabrication l'invention, la soudure est réalisée par écrasement des extrémités du tube et échauffement des parois dudit tube de sorte à les souder entre-elles.

Selon un autre aspect du procédé de fabrication l'invention, des bourrelets radiaux sont formés lors de l'écrasement et de l'échauffement des parois du tube.

Selon un aspect du procédé de fabrication l'invention, la soudure est réalisée par échauffement des parois du tube de sorte à les souder avec un bouchon.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 montre une représentation schématique d'une extrémité d'un tube de matériau à changement de phase encapsulé selon un premier mode de réalisation,
- la figure 2 montre une représentation schématique d'une extrémité d'un tube de matériau à changement de phase encapsulé selon un second mode de réalisation.

Sur les différentes figures, les éléments identiques portent les mêmes numéros de référence.

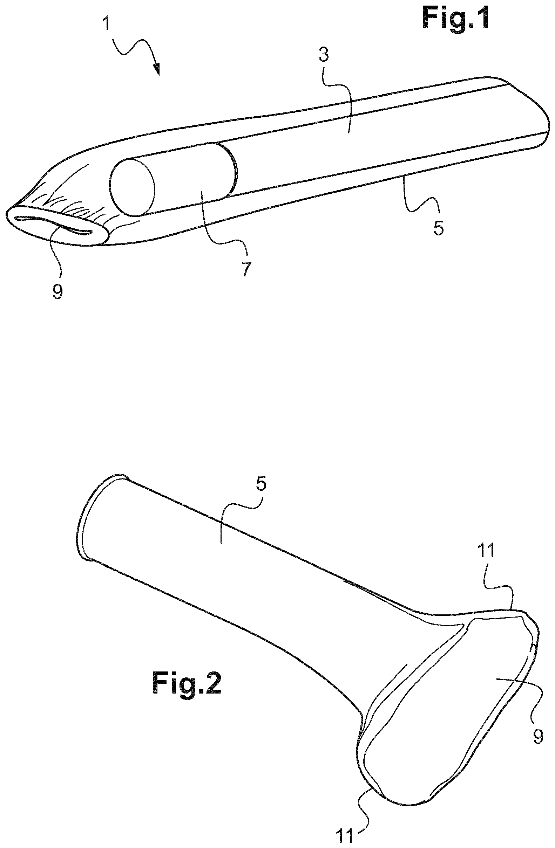

La matériau à changement de phase encapsulé 1 illustré aux figures 1 et 2 comporte un tube réalisé en matière plastique, par exemple en polycarbonate. Le tube 5 contient un matériau à changement de phase 3 et ses extrémités présentent des soudures de scellement 9 afin de maintenir ledit matériau à changement de phase 3 à l'intérieur dudit tube 5. Un tel tube 5 est notamment utilisé dans le domaine automobile dans des batteries thermiques comportant une multitude de tube 5 à matériau à changement de phase. 3.

Par soudure de scellement, on entend que la paroi en plastique du tube 5 subit une fusion au moins partielle afin de former une fermeture étanche.

La présence des soudures de scellement 9 permet une bonne étanchéité et ainsi diminue les risques de fuite du matériau à changement de phase 3 notamment lorsque ce dernier est en phase liquide.

Selon un premier mode de réalisation illustré aux figures 1 et 2, la soudure de scellement 9 est réalisée par écrasement et fusion des parois du tube 5.

Afin d'assurer un niveau d'étanchéité encore plus important, on insère un bouchon 7 au sein du tube 5 avant la soudure des parois du tube 5 entre-elles. Le bouchon 7 est alors disposé entre le matériau à changement de phase 3 et la soudure de scellement 9 comme le montre la figure 1.

Dans ce mode de réalisation, la soudure de scellement 9 peut présentes des bourrelets radiaux 11. Dans le cadre d'une batterie thermique comportant une multitude de tubes 5 à matériau à changement de phase 3, ces bourrelets radiaux 11 permettent d'espacer lesdits tubes 5 les un des autres afin de faciliter la circulation d'un fluide traversant ladite batterie thermique.

L'invention concerne également le procédé de fabrication du matériau à changement de phase encapsulé 1. Le procédé de fabrication comporte ainsi au moins une étape de scellement par soudure des parois du tube 5 à ses extrémités.

Cette étape est précédée d'une étape d'introduction d'un bouchon 7 entre les extrémités du tube 5 et le matériau à changement de phase 3.

Lors de cette étape de soudure des parois du tube 5 à ses extrémités, la soudure par scellement 9 est réalisée par écrasement des extrémités du tube 5 et échauffement des parois dudit tube 5 de sorte à les souder entre-elles. Lors de cet écrasement et échauffement sont réalisés les bourrelets radiaux 11, notamment par fluage de la matière sur les côtés.

A contrario, la soudure par scellement 9 peut être réalisée par échauffement des parois du tube 5 de sorte à les souder avec le bouchon 7 lors de l'étape de soudure des parois du tube 5 à ses extrémités.

Ainsi, on voit bien que le matériau à changement de phase encapsulé 1 selon l'invention permet du faite de ces soudures de scellement 9 à ses extrémités une étanchéité accrue.

## Revendications

1. Matériau à changement de phase encapsulé (1) comportant un matériau à changement de phase (3) contenu dans un tube (5), ledit tube (5) étant réalisé en matière plastique et présente à au moins une de ses extrémités une soudure de scellement (9), la soudure de scellement (9) étant réalisée par écrasement et fusion de la paroi dudit tube (5) **caractérisé en ce qu'**un bouchon (7) est disposé au sein du tube entre la soudure de scellement (9) et le matériau à changement de phase (3).

2. Matériau à changement de phase encapsulé (1) selon la revendication 1, **caractérisé en ce que** la soudure de scellement (9) présente des bourrelets radiaux (11).

3. Batterie thermique **caractérisée en ce qu'**elle comporte un matériau à changement de phase encapsulé (1) selon l'une des revendications précédentes.

4. Procédé de fabrication d'un matériau à changement de phase encapsulé (1) comportant un matériau à changement de phase (3) contenu dans un tube (5) réalisé en matière plastique, ledit procédé comprenant au moins :
- une étape de scellement par soudure des parois du tube (5) à ses extrémités, la soudure étant réalisée par écrasement des extrémités du tube (5) et échauffement des parois dudit tube (5) de sorte à les souder entre-elles, et
- une étape d'introduction d'un bouchon (7) entre les extrémités du tube (5) et le matériau à changement de phase (3), précédant l'étape de scellement par soudure.

5. Procédé de fabrication selon la revendication précédente, **caractérisé en ce que** des bourrelets radiaux (11) sont formés lors de l'écrasement et de l'échauffement des parois du tube (5).

6. Procédé de fabrication selon la revendication 4, **caractérisé en ce que** la soudure est réalisée par échauffement des parois du tube (5) de sorte à les souder avec un bouchon (7).

## Patentansprüche

1. Eingekapseltes Phasenwechselmaterial (1), welches ein in einem Rohr (5) enthaltenes Phasenwechselmaterial (3) aufweist, wobei das Rohr (5) aus Kunststoff hergestellt ist und an wenigstens einem seiner Enden eine Abdichtungsschweißung (9) aufweist, wobei die Abdichtungsschweißung (9) durch Zusammendrücken und Schmelzen der Wand des Rohres (5) erfolgt, **dadurch gekennzeichnet, dass** ein Stopfen (7) innerhalb des Rohres zwischen der Abdichtungsschweißung (9) und dem Phasenwechselmaterial (3) angeordnet ist.

2. Eingekapseltes Phasenwechselmaterial (1) nach Anspruch 1, **dadurch gekennzeichnet, dass** die Abdichtungsschweißung (9) radiale Wülste (11) aufweist.

3. Thermische Batterie, **dadurch gekennzeichnet, dass** sie ein eingekapseltes Phasenwechselmaterial (1) nach einem der vorhergehenden Ansprüche aufweist.

4. Verfahren zur Herstellung eines eingekapselten Phasenwechselmaterials (1), welches ein Phasenwechselmaterial (3) aufweist, das in einem aus Kunststoff hergestellten Rohr (5) enthalten ist, wobei das Verfahren mindestens umfasst:
- einen Schritt der Abdichtung der Wände des Rohres (5) an seinen Enden durch Schweißung, wobei die Schweißung durch Zusammendrücken der Enden des Rohres (5) und Erwärmung der Wände des Rohres (5), um sie miteinander zu verschweißen, erfolgt, und
- einen Schritt der Einführung eines Stopfens (7) zwischen die Enden des Rohres (5) und das Phasenwechselmaterial (3), der dem Schritt der Abdichtung durch Schweißung vorangeht.

5. Verfahren zur Herstellung nach dem vorhergehenden Anspruch, **dadurch gekennzeichnet, dass** beim Zusammendrücken und Erwärmen der Wände des Rohres (5) radiale Wülste (11) gebildet werden

6. Verfahren zur Herstellung nach Anspruch 4, **dadurch gekennzeichnet, dass** die Schweißung durch Erwärmung der Wände des Rohres (5) erfolgt, um sie mit einem Stopfen (7) zu verschweißen.

## Claims

1. Encapsulated phase-change material (1) comprising a phase-change material (3) contained within a tube (5), said tube (5) being made of plastic and having a sealing weld (9) at least at one of its ends, the sealing weld (9) being produced by crushing and fusing the wall of said tube (5), **characterized in that** a plug (7) is arranged within the tube between the sealing weld (9) and the phase-change material (3).

2. Encapsulated phase-change material (1) according to Claim 1, **characterized in that** the sealing weld (9) has radial beads (11).

3. Thermal battery, **characterized in that** it comprises an encapsulated phase-change material (1) according to either of the preceding claims.

4. Method of producing an encapsulated phase-change material (1) comprising a phase-change material (3) contained within a tube (5) made of plastic, said method comprising at least:
- a step of sealing the walls of the tube (5) at its ends using welding, the weld being produced by crushing the ends of the tube (5) and heating the walls of said tube (5) so as to weld these together, and
- a step of introducing a plug (7) between the ends of the tube (5) and the phase-change material (3), prior to the step of sealing by welding.

5. Production method according to the preceding claim, **characterized in that** radial beads (11) are formed as the walls of the tube (5) are crushed and heated.

6. Production method according to Claim 4, **characterized in that** the weld is produced by heating walls of the tube (5) so as to weld these to a plug (7).
